# EUROPEAN PATENT APPLICATION

(11) **EP 1 643 458 A2**
(43) Date of publication of application: **05.04.2006**
(21) Application number: 05015546.4
(22) Date of filing: 18.07.2005
(51) Int. Cl.: G07C 9/00

(54) **Passive keyless entry device**

(30) Priority: 20.07.2004 JP 2004211534
(71) Applicant: ALPS ELECTRIC CO., LTD., Tokyo 145-8501 (JP)
(72) Inventor: Masudaya, Hideki, Ota-ku (JP)
(74) Representative: Klunker . Schmitt-Nilson . Hirsch

(57) **Abstract**

An on-vehicle transceiver includes a control section that processes transmission and received signals of the on-vehicle transceiver and a control signal, and a timing section that checks time until a set time passes after the request signal is transmitted. The control section receives the answer signal in the set time of the timing section after the request signal is transmitted, when the answer signal includes the identification (ID) of a regular portable transceiver, resets the timing section and controls the on-vehicle controlled mechanism based on the answer signal, and, when the answer signal cannot be received even if the set time of the timing section has passed, retransmits, to the portable transceiver, the request signal with a lowered transmission level by a certain value.

## Description

### BACKGROUND OF THE INVENTION

### 1. Field of the Invention

The present invention relates to a passive keyless entry device that has an on-vehicle transceiver and a portable transceiver.

### 2. Description of the Related Art

In a vehicle, such as a car or the like, a door-lock mechanism is provided in order to prevent the vehicle from being stolen or damaged when the vehicle is not used. Further, in order to simply drive the door-lock mechanism, a passive keyless entry device is mounted on the vehicle. Such a passive keyless entry device includes an on-vehicle transceiver that is mounted on the vehicle and one or more portable transceiver that is held by a driver of the vehicle or the like. When the driver drives his vehicle, if the driver does not hold the portable transceiver that is registered in the vehicle, the door of the vehicle cannot be opened and closed.

In this type of the passive keyless entry device, the identification (ID) of the portable transceiver to be used needs to be registered in the on-vehicle transceiver mounted on the vehicle. Further, as regards the operation of the passive keyless entry device, first, if the driver holding the portable transceiver that is pre-registered or a predetermined person approaches the vehicle, a low-frequency request signal including a wake-up signal, which is radio-transmitted from the on-vehicle transceiver, is received by the portable transceiver. Then, the portable transceiver radio-transmits a radio-frequency answer signal including its own ID and an instruction signal to the on-vehicle transceiver in response to the received low-frequency signal. When receiving the radio-frequency signal, the on-vehicle transceiver authenticates whether the ID included in the radio-frequency signal is a pre-registered regular ID. Next, if the authentication ends, the control according to the instruction signal included in the radio-frequency signal is performed. For example, the door of the vehicle is opened or the engine of the vehicle starts up. Therefore, the driver can drive the vehicle. Such a passive keyless entry device is disclosed in Japanese Unexamined Patent Application Publication No. 2000-320212.

However, in the passive keyless entry device, when the low-frequency request signal including the wake-up signal from the on-vehicle transceiver is radio-transmitted to the portable transceiver, the level of the request signal, which is radio-transmitted from the on-vehicle transceiver and is received by the portable transceiver, significantly changes according to the distance relationship between the position of the person holding the portable transceiver and the position of the vehicle, on which the on-vehicle transceiver is mounted. That is, when the portable transceiver and the on-vehicle transceiver are properly separated from each other, the level of the request signal to be received by the portable transceiver is not so high. On the other hand, when the portable transceiver and the on-vehicle transceiver are close to each other, and more particularly, when the portable transceiver is in the vehicle, the level of the request signal to be received by the portable transceiver becomes significantly high. Further, if such a high-level signal, which exceeds a tolerance level of a detecting section, is inputted to the detecting section, the detecting section can be damaged. Moreover, the level of the transmission signal is lowered, such a problem does not occur. In that case, however, there is a problem in that a signal cannot be transmitted in a predetermined range around the vehicle.

In order to prevent the detecting section from being damaged, a passive keyless entry device having the following configuration has been considered. A protection circuit including a Zener diode is connected between a receiving antenna and a signal receiving section of the portable transceiver. When the level of the received signal is high, the protection circuit lowers the level of the received signal below the tolerance level of the detecting section, so that the detecting section can be suppressed from being damaged due to the input signal higher than the tolerance level, that is, the high-level signal. However, the peak of the high-level signal to be inputted into the detecting section is blocked by the protection circuit, so that the waveform of the signal is subject to be changed. Therefore, the transmission signal before being modulated cannot be completely demodulated. Further, when the received signal is the low-frequency signal, which has been subjected to an ideal square-wave ASK (Amplitude Shift Keying) modulation, but is a high-level signal because attenuation signals are added by a time constant of an LC antenna. In this case, the width of an envelope curve has changed, as compared to the transmission signal, so that the detecting section cannot normally detect the high-level signal.

For this reason, recently, there is also provided a passive keyless entry device that changes an instruction to the vehicle when the portable transceiver is in the vehicle and when the portable transceiver is outside the vehicle. Such a passive keyless entry device needs to correctly identify the signal of the portable transceiver even in the vehicle. In this case, however, since the signal is an intense input, there is a problem in that a regular portable transceiver cannot be identified.

In addition, there is also provided a passive keyless entry device that automatically locks the vehicle when the regular ID of the portable transceiver is not detected. In such a passive keyless entry device, when a high input signal is received before a driver gets in the vehicle and it cannot be detected whether or not the portable transceiver is regular, there is a problem in that the vehicle is locked. Further, even when a received signal is detected several times in order to release the lock for the first time, the same problem occurs. In addition, when the vehicle is parked close to an electromagnetically shielded obstacle and a driver gets into the vehicle just after coming out of the influence of the obstacle, the same problem occurs.

In the above-described example, the portable transceiver receives the high-level signal as it is. On the contrary, a keyless entry device has been proposed in which the on-vehicle transceiver processes the transmission signal so as to obtain the level of the received signal to the extent that the portable transceiver can suitably receive the received signal. Japanese Unexamined Patent Application Publication No. 2002-316616 or Japanese Patent No. 3003668 is an example of related art.

In the keyless entry device disclosed in Japanese Patent No. 3003668, the on-vehicle transceiver is provided with a transmission-signal-level adjusting and setting unit that detects a change in the environment of the portable transceiver, for example, distinguishes between daytime and night or between an unclouded day and a rainy day, and adjusts and sets the transmission signal level according to the detection result.

In addition, in the keyless entry device disclosed in Japanese Unexamined Patent Application Publication No. 2002-316616, the on-vehicle transceiver is provided with a transmission-signal-level adjusting and setting unit. At the time of shipping of the keyless entry device or when the keyless entry device, in which the on-vehicle transceiver is mounted on the vehicle, is used, if it is necessary to adjust the detection distance of the transmission signal, which is transmitted from the on-vehicle transceiver to the portable transceiver, the transmission-signal-level adjusting and setting unit adjusts and sets the level of the transmission signal accordingly.

The keyless entry device disclosed in Japanese Patent No. 3003668 or the keyless entry device disclosed in Japanese Unexamined Patent Application Publication No. 2002-316616 adjusts the level of the transmission signal level in order to change the range of the transmission signal from the on-vehicle transceiver. At this time, the level of the transmission signal is set to one level corresponding to a predetermined range. However, such a keyless entry device cannot identify a transmission signal when the high-level signal is inputted, other than a normal transmission level. Specifically, when the high-level signal is inputted, such that the portable transceiver cannot judge whether or not that signal is outputted from the regular on-vehicle transceiver, the portable transceiver does not respond to the transmission signal and does not takes any countermeasure.

### SUMMARY OF THE INVENTION

The present invention has been made in consideration of such a technical background, and it is an object of the present invention to provide a passive keyless entry device in which, even when a regular portable transceiver is disposed at a maximum distance of a predetermined range around a vehicle where a response is required and even when a high-level signal exceeding a tolerance level of a detecting section is inputted to a portable transceiver that is disposed close to the vehicle, the portable transceiver can reliably confirm a regular signal, such that the portable transceiver can transmit an answer signal so as to cause a control section of the vehicle to perform a predetermined operation.

In order to achieve the above-described object, a passive keyless entry device according to the present invention includes an on-vehicle transceiver, and a portable transceiver. The on-vehicle transceiver transmits a request signal to the portable transceiver, the portable transceiver transmits an answer signal for causing an on-vehicle controlled mechanism to perform a control operation in response to the request signal, the on-vehicle transceiver receives the answer signal so as to cause the on-vehicle controlled mechanism to perform the control operation. The on-vehicle transceiver has a control section that processes transmission and received signals of the on-vehicle transceiver and a control signal, and a timing section that checks time until a set time passes after the request signal is transmitted. The control section receives the answer signal in the set time of the timing section after the request signal is transmitted, when the answer signal includes the regular identification (ID) of the portable transceiver, resets the timing section and controls the on-vehicle controlled mechanism based on the answer signal, and, when the answer signal cannot be received even if the set time of the timing section has passed, retransmits, to the portable transceiver, the request signal with a lowered transmission level by a certain value.

In the passive keyless entry device according to the aspect of the present invention, a unit that lowers the transmission level of the request signal by the certain value decreases a driving current for driving an antenna by a certain amount through the control of a control element that is connected in series to the antenna for transmitting the request signal.

In the passive keyless entry device according to the aspect of the present invention, a unit that lowers the transmission level of the request signal by the certain value decreases a driving current for driving an antenna by a certain amount through the control of a gate bias voltage of FETs for power-amplifying the request signal before the transmission.

### BRIEF DESCRIPTION OF THE DRAWINGS

Fig. 1 is a block diagram showing essential parts of an on-vehicle transceiver that is used in a passive keyless entry device according to the present invention, which shows an example of the configuration thereof;
Fig. 2 is a block diagram showing essential parts of a portable transceiver that is used in a passive keyless entry device according to the present invention, which shows an example of the configuration thereof;
Fig. 3 is a circuit diagram showing essential parts of a low-frequency-signal transmitting section that sets stepwise the transmission level of a low-frequency signal in the on-vehicle transceiver shown in Fig. 1, which shows an example of the configuration thereof;
Fig. 4 is a circuit diagram showing essential parts of a low-frequency-signal transmitting section that sets stepwise the transmission level of a request signal in the on-vehicle transceiver shown in Fig. 1, which shows another example of the configuration thereof; and
Fig. 5 is a circuit diagram showing essential parts of a low-frequency-signal transmitting section that sets stepwise the transmission level of a request signal in the on-vehicle transceiver shown in Fig. 1, and a control section, which shows still another example of the configuration thereof.

### DESCRIPTION OF THE PREFERRED EMBODIMENT

Hereinafter, embodiments of the present invention will be described with reference to the drawings.

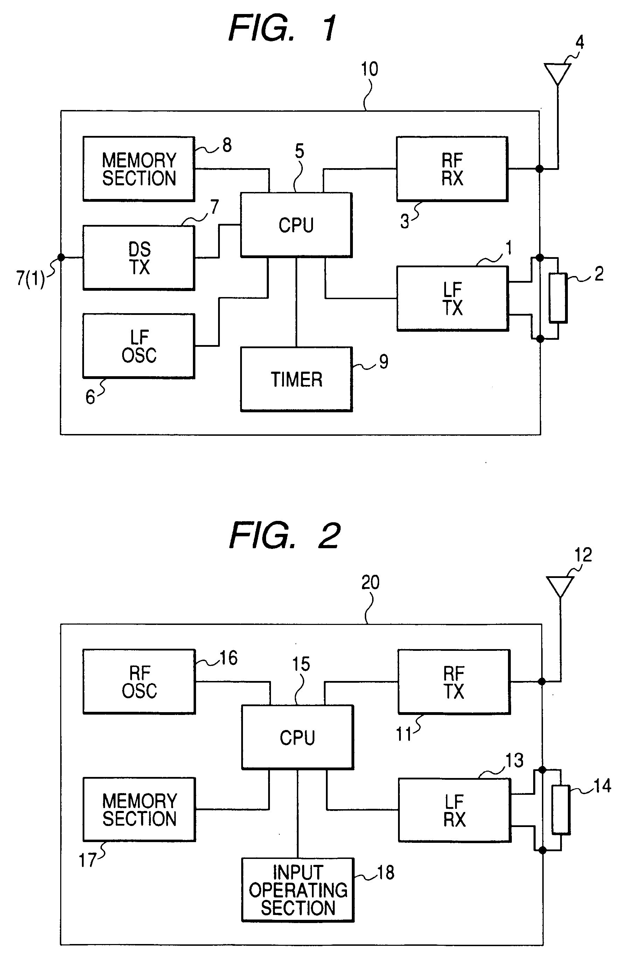

Fig. 1 is a block diagram showing essential parts of an on-vehicle transceiver 10 that is used in a passive keyless entry device according to the present invention, which shows an example of the configuration thereof.

As shown in Fig. 1, the on-vehicle transceiver 10 according to the present embodiment has a low-frequency-signal transmitting section (LF TX) 1, a low-frequency transmitting antenna 2, a radio-frequency-signal receiving section (RF RX) 3, a radio-frequency receiving antenna 4, a control section (CPU) 5, a low-frequency oscillator (LF OSC) 6, a driving-signal transmitting section (DS TX) 7, a memory section 8, and a timer (timing section) 9. In this case, an input terminal of the low-frequency-signal transmitting section 1 is connected to the control section 5 and the output terminal thereof is connected to the low-frequency transmitting antenna. The input terminal of the radio-frequency-signal receiving section 3 is connected to the radio-frequency receiving antenna 4 and the output terminal thereof is connected to the control section 5. The output terminal of the low-frequency oscillator 6 is connected to the control section 5. The input terminal of the driving-signal transmitting section 7 is connected to the control section 5 and the output terminal of the driving-signal transmitting section 7 is connected to an external connecting terminal 7 (1). Control terminals of the memory section 8 and the timer 9 are connected to the control section 5.

If a wake-up signal and a low-frequency signal including the identification (ID) of a portable transceiver 20 are supplied from the control section 5, the low-frequency-signal transmitting section 1 amplifies the low-frequency signal to have a signal level suitable for transmission and radio-transmits the amplified signal as a request signal via the low-frequency transmitting antenna 2. The radio-frequency-signal receiving section 3 receives, via the radio-frequency receiving antenna 4, an answer signal that is a radio-frequency signal including the ID of the portable transceiver 20 or an instruction signal. The answer signal is radio-transmitted from the portable transceiver 20, which will be described below. Then, the radio-frequency-signal receiving section 3 amplifies the received radio-frequency signal to have a predetermined signal level, detect the amplified signal, and supplies the detected signal to the control section 5. The low-frequency oscillator 6, which oscillates a low-frequency signal of a carrier wave, supplies the oscillated low-frequency signal to the control section 5. At this time, the control section 5 applies an amplitude modulation to the supplied low-frequency signal by the wake-up signal and the signal representing the ID of the portable transceiver 20, thereby converting the low-frequency signal into a transmission signal suitable for radio transmission. Then, the control section 5 supplies the obtained transmission signal to the low-frequency-signal transmitting section 1. Based on the instruction signal extracted by the control section 5, the driving-signal transmitting section 7 receives a driving signal, which is indicated by the instruction signal, from the control section 5 to transmit the driving signal to a corresponding controlled mechanism. The memory section 8 stores the registered ID of the portable transceiver 20 and various control signals. The ID and the control signals are properly read by the control section 5. The read ID is used for the formation of a request signal or for the authentication of the ID that is included in the received radio-frequency signal. Further, the read control signals are used for controlling a controlled mechanism. According to the control of the control section 5, the timer 9 starts to check time when the low-frequency signal is transmitted from the low-frequency-signal transmitting section 1 and continues to check time until the time reaches a set time or an instruction to stop checking time is supplied from the control section 5.

Next, Fig. 2 is a block diagram showing essential parts of a portable transceiver 20 that is used in the passive keyless entry device according to the present invention, which shows an example of the configuration thereof.

As shown in Fig. 2, a portable transceiver 20 according to the present embodiment has a radio-frequency-signal transmitting section (RF TX) 11, a radio-frequency transmitting antenna 12, a low-frequency-signal receiving section (LF RX) 13, a low-frequency receiving antenna 14, a control section (CPU) 15, a radio-frequency oscillator (RF OSC) 16, a memory section 17, and an input operating section 18. In this case, the input terminal and the output terminal of the radio-frequency-signal transmitting section 11 are connected to the control section 15 and the radio-frequency transmitting antenna 12, respectively. The input terminal and the output terminal of the low-frequency-signal receiving section 13 are connected to the low-frequency receiving antenna 14 and the control section 15, respectively. The output terminal of the radio-frequency oscillator 16 is connected to the control section 15. Control terminals of the memory section 17 and the input operating section 18 are connected to the control section 15.

If the radio-frequency signal including the ID of the portable transceiver 20 or the instruction signal is supplied from the control section 15, the radio-frequency-signal transmitting section 11 amplifies the radio-frequency signal to have a signal level suitable for radio transmission and radio-transmits the amplified radio-frequency signal via the radio-frequency transmitting antenna 12. The low-frequency-signal receiving section 13 receives the low-frequency request signal including the wake-up signal radio-transmitted from the on-vehicle transceiver 10 via the low-frequency receiving antenna 14. Then, the low-frequency-signal receiving section 13 amplifies the received low-frequency signal to have a predetermined signal level, detect the amplified low-frequency signal, and supplies the detected low-frequency signal to the control section 15. The radio-frequency oscillator 16, which oscillates a radio-frequency signal, supplies the oscillated radio-frequency signal to the control section 15. At this time, the control section 15 frequency-modulates the supplied radio-frequency signal by the ID of the portable transceiver 20 or the instruction signal, thereby converting the radio-frequency signal into a transmission signal suitable for radio transmission. Then, the control section 15 supplies the obtained transmission signal to the radio-frequency-signal transmitting section 11. The memory section 17 stores its own ID of the portable transceiver 20 or various instruction signals. According to the control of the control section 15, the ID of the portable transceiver 20 or the instruction signal is properly read. In the input operating section 18 including an operating member that is manually operable, if the operating member is selectively operated, an instruction signal corresponding to the operation state is read from the memory section 17, together with the ID of the portable transceiver 20, according to the control of the control section 15.

The on-vehicle transceiver 10 and the portable transceiver 20 having the above-described configurations operate as follows, respectively.

According to the control of the control section 5, the on-vehicle transceiver 10 intermittently forms the low-frequency signal including the wake-up signal and a data signal representing the ID of the portable transceiver 20, supplies the formed low-frequency signal to the low-frequency-signal transmitting section 1, and radio-transmits the low-frequency signal as the request signal from the low-frequency-signal transmitting section 1 via the low-frequency transmitting antenna 2.

In such a state, if a user holding the portable transceiver 20 approaches a car on which the on-vehicle transceiver 10 is mounted, the portable transceiver 20 can receive the signal that is radio-transmitted from the on-vehicle transceiver 10. At this time, if the portable transceiver 20 receives the transmission signal from the low-frequency receiving antenna 14, the received signal is amplified and detected by the low-frequency-signal receiving section 13, and the wake-up signal and the data signal included in the received signal are extracted to be supplied to the control section 15. If the wake-up signal and the data signal are supplied, the control section 15 starts up. Further, when it is judged that the ID of the portable transceiver 20 is included in the signal, the control section 15 forms the radio-frequency signal including the ID of the portable transceiver 20 and the instruction signal, supplies the formed radio-frequency signal to the radio-frequency-signal transmitting section 11, and radio-transmits the radio-frequency signal as the answer signal from the radio-frequency-signal transmitting section 11 via the radio-frequency transmitting antenna 12.

Here, if the on-vehicle transceiver 10 receives the transmission signal from the radio-frequency transmitting antenna 4, the received signal is amplified and detected by the radio-frequency-signal receiving section 3, and the ID and the instruction signal included in the received signal are extracted to be supplied to the control section 5. If the ID and the instruction signal are supplied and it is authenticated that the supplied ID matches with the pre-registered ID in the memory section 8, the control section 5 reads the driving signal corresponding to the supplied instruction signal from the memory section 8 and supplies the read driving signal from the driving-signal transmitting section 7 to a corresponding controlled mechanism, thereby remote-controlling the controlled mechanism. On the other hand, if it is not authenticated that the supplied ID matches with the pre-registered ID in the memory section 8, the supplied instruction signal is immediately discarded, so that the controlled mechanism is not remote-controlled.

While the above-described operation is performed, and when the request signal is transmitted from the low-frequency transmitting antenna 2 of the low-frequency-signal transmitting section 1, the timer 9 of the on-vehicle transceiver 10 starts to check time through the control of the control section 5. Checking time is continuously carried out until the set time of the timer 9 passes. At this time, the on-vehicle transceiver 10 responds to the request signal that is radio-transmitted from the on-vehicle transceiver 10. If the answer signal is radio-transmitted from the portable transceiver 20 to be received by the on-vehicle transceiver 10 in the set time of the timer 9 and it is authenticated that the ID extracted from the received signal matches with the pre-registered ID, the timer 9 is reset so that checking time is set to 0 and the controlled mechanism is remote-controlled, as described above. Meanwhile, in the case where the on-vehicle transceiver 10 cannot receive the answer signal from the portable transceiver 20 in the set time of the timer 9, the on-vehicle transceiver 10 resets the timer 9, so that checking time is set to 0 when the set time of the timer 9 passes, through the control of the control section 5. In addition, the on-vehicle transceiver 10 supplies the control signal to the low-frequency-signal transmitting section 1, decreases the transmission level of the request signal which is to be radio-transmitted at a next transmission timing so that the transmission level is lower than the normal level by a certain value, and retransmits the low-level request signal. Even when the low-level request signal is retransmitted, the timer 9 starts to check time through the control of the control section 5.

Subsequent, the portable transceiver 20 responds to the retransmission of the low-level request signal and the answer signal is radio-transmitted from the portable transceiver 20. When the on-vehicle transceiver 10 receives the answer signal in the set time of the timer 9, the same operation as described above is performed through to the control of the control section 5. On the other hand, there may be a case where the on-vehicle transceiver 10 cannot receive the answer signal from the portable transceiver 20 in the set time of the timer 9 even if the portable transceiver 20 retransmits the low-level request signal. In this case, through the control of the control section 5, the on-vehicle transceiver 10 resets the timer 9 so that checking time is set to 0 when the set time of the timer 9 passes. Then, the on-vehicle transceiver 10 continues to supply the control signal to the low-frequency-signal transmitting section 1, decreases the transmission level of the request signal, which is to be radio-transmitted at the next transmission timing, into the transmission level lower than the normal level by a certain value, and retransmits the low-level request signal without interruption. Further, there may be a case where the on-vehicle transceiver 10 cannot still receive the answer signal from the portable transceiver 20 even if the portable transceiver 20 repeatedly retransmits the low-level request signal more than once. In this case, through the control of the control section 5, the on-vehicle transceiver 10 stops supplying the control signal to the low-frequency-signal transmitting section 1, returns the transmission level of the request signal, which is to be radio-transmitted at the next transmission timing, into the normal level, and retransmit the request signal. In this case, the repeated number of the retransmissions of the low-level request signals is preferably 2 to 4, but may be 1 or 5 or more.

In addition, in the above-described embodiment of the present invention, the transmission level of the request signal that is radio-transmitted from the on-vehicle transceiver 10 is set in two stages of the normal level and the low level. However, the transmission level in the present invention is not limited to this configuration, but may be set in three stages of the normal level, the low level, and the lowest level, which is lower than the low level. Further, the transmission level may be set in four stages with an additional stage. At any case, the transmission level changes stepwise.

According to the embodiment of the present invention, there may be a case where the portable transceiver 20 is disposed extremely close to the on-vehicle transceiver 10. For example, even when the portable transceiver 20 is inside a car, the transmission level of the request signal, which is radio-transmitted from the on-vehicle transceiver 10, is decreased, so that the request signal can be correctly received by the portable transceiver 20 inside the car. As a result, the request signal having the transmission level corresponding to a change in the arrangement state of the on-vehicle transceiver 10 and the portable transceiver 20 can be radio-transmitted from the on-vehicle transceiver 10 to the portable transceiver 20 and thus the level of the request signal can be set in a flexible form. Moreover, when the low-level request signal is transmitted, receiving sensitivity of the antenna that receives the answer signal is allowed to be lowered, so that a large input signal cannot be received by the on-vehicle transceiver 10.

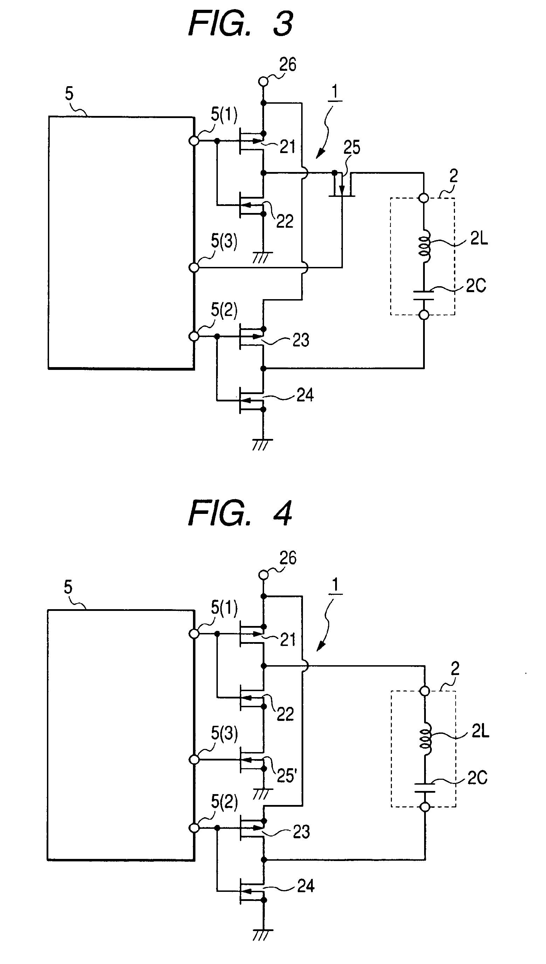

Next, Fig. 3 is a circuit diagram showing essential parts of the low-frequency-signal transmitting section 1 that sets the transmission level of the request signal stepwise in the on-vehicle transceiver 10 shown in Fig. 1, which shows an example thereof.

As shown in Fig. 3, the low-frequency-signal transmitting section 1 includes a pair of first amplifying complementary field-effect transistors (FETs) 21 and 22, a pair of second amplifying FETs 23 and 24, and a control FET 25. In addition, the low-frequency transmitting antenna 2 has an inductance 2L and a capacitance 2C that are connected to each other in series. The control section 5 includes a first signal output terminal 5(1), a second signal output terminal 5(2), and control signal output terminal 5(3). The first signal output terminal 5(1) and the second signal output terminal 5(2) output complementary low-frequency signals and the control signal output terminal 5(3) outputs the control signal.

In the pair of first amplifying complementary FETs 21 and 22, drain-source paths are connected in series between a power terminal 26 and a ground point, and gates thereof are commonly connected to the first signal output terminal 5(1). Similarly, in the pair of amplifying complementary FETs 23 and 24, drain-source paths are connected in series between the power terminal 26 and the ground point, and gates thereof are commonly connected to the second signal output terminal 5(2). In the control FET 25, a drain-source path is connected between the connection point of the pair of the first complementary FETs 21 and 22 and one terminal of the low-frequency transmitting antenna 2, and a gate thereof is connected to the control signal output terminal 5(3). The other terminal of the low-frequency transmitting antenna 2 is connected to the connection point of the pair of second amplifying complementary FETs 23 and 24.

The low-frequency-signal transmitting section 1 having such a configuration operates as follows.

At the transmission timing of the on-vehicle transceiver 10, the control section 5 outputs complementary low-frequency signals to the first signal output terminal 5(1) and the second signal output terminal 5(2). The complementary low-frequency signals are supplied to the gates of the pair of the first amplifying complementary FETs 21 and 22 and the gates of the pair of the second amplifying complementary FETs 23 and 24, respectively. The pair of the first amplifying complementary FETs 21 and 22 and the pair of the second amplifying complementary FETs 23 and 24 power-amplify the complementary low-frequency signals. The power-amplified complementary low-frequency signal is led between the connection point of the pair of the first amplifying complementary FETs 21 and 22 and the connection point of the pair of the second amplifying complementary FETs 23 and 24. The obtained complementary low-frequency signal is supplied to the low-frequency transmitting antenna 2 via the control FET 25 and thus the request signal is transmitted as a radio signal from the low-frequency transmitting antenna 2.

In the on-vehicle transceiver 10, when the transmission level of the request signal to be transmitted at the transmission timing is set to the normal level, a control signal, which completely turns on the control FET 25, is outputted from the control signal output terminal 5(3) of the control section 5 to be supplied to the gate of the control FET 25. At this time, since the control FET 25 is completely turned on by the control signal, the complementary low-frequency signal led between the connection point of the first amplifying complementary FETs 21 and 22 and the connection point of the second amplifying complementary FETs 23 and 24 is supplied to the low-frequency transmitting antenna 2 with no loss by the control FET 25. Then, the request signal with the normal level is transmitted as the radio signal from the low-frequency transmitting antenna 2.

On the other hand, in the on-vehicle transceiver 10, when the transmission level of the request signal to be transmitted is set to the low level which is lower than the normal level, a control signal, which intermediately turns on the control FET 25, is outputted from the control signal output terminal 5(3) of the control section 5 to be supplied to the gate of the control FET 25. At this time, since the control FET 25 is intermediately turned on by the control signal, the complementary low-frequency signal led between the connection point of the first amplifying complementary FETs 21 and 22 and the connection point of the second amplifying complementary FETs 23 and 24 is supplied to the low-frequency transmitting antenna 2, while a driving current is slightly reduced by the control FET 25. As a result, the low-level request signal is transmitted as the radio signal from the low-frequency transmitting antenna 2.

In addition, in the on-vehicle transceiver 10, the transmission level of the request signal to be transmitted is set in three stages of the normal level, the low level, and the lowest level. In this case, according to the stages, the control signal that completely turns on the control FET 25, the control signal that intermediately turns on the control FET 25, and the control signal that incompletely turns on the control FET 25 are outputted from the control section 5, respectively. Then, the request signal having any one of the three stages of the transmission level is transmitted as the radio signal from the low-frequency transmitting antenna 2.

Next, Fig. 4 is a circuit diagram showing essential parts of the low-frequency-signal transmitting section 1 that sets the transmission level of the request signal in stages in the on-vehicle transceiver 10 shown in Fig. 1, which shows another example thereof.

With comparing the example shown in Fig. 4 (hereinafter, referred to as the second example) to the example shown in Fig. 3 (hereinafter, referred to as the first example), the connection point of the control FET 25 is different from the connection point of a control FET 25'. Other parts of the second example are the same as those in the first example. That is, there is a difference in that, in the first example, the control FET 25 is connected between the connection point of the pair of first amplifying complementary FETs 21 and 22 and one terminal of the low-frequency transmitting antenna 2, while, in the second example, the control FET 25' is connected between the ground point and the ground-side terminals of the pair of first amplifying complementary FETs 21 and 22. Moreover, in Fig. 4, the same parts as those shown in Fig. 3 are represented by the same reference numerals and the descriptions thereof will be omitted.

An operation of the second example having the above-described configuration is the substantially same as the operation of the first example described above, including the operation of the control FET 25'. For this reason, further description will be omitted.

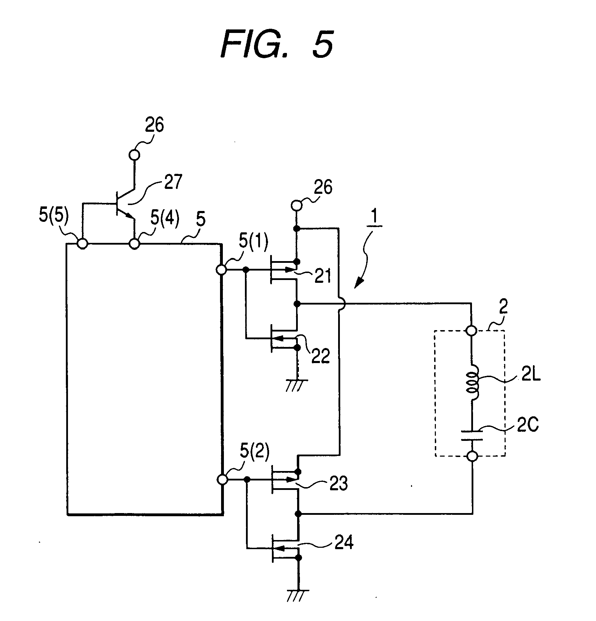

Fig. 5 is a circuit diagram showing essential parts of the low-frequency-signal transmitting section 1, which set the transmission level of the request signal stepwise in the on-vehicle transceiver 10 shown in Fig. 1, and the control section 5.

As shown in Fig. 5, the low-frequency-signal transmitting section 1 includes a pair of first amplifying complementary FETs 21 and 22 and a pair of second amplifying complementary FETs 23 and 24. In addition, a low-frequency transmitting antenna 2 has an inductance 2L and a capacitance 2C, which are connected to each other in series. A control section 5 includes an external power-supply-voltage controlling transistor 27, a first signal output terminal 5(1), a second signal output terminal 5(2), a power terminal 5(4), and a voltage-control-signal output terminal 5(5). Complementary low-frequency signals are outputted from the first signal output terminal 5(1) and the second signal output terminal 5(2), a power supply voltage is supplied to the power supply terminal 5(4), and a voltage control signal is outputted from the voltage-control-signal output terminal 5(5).

The drain-source paths of the pair of first amplifying complementary FETs 21 and 22 are connected in series between the power terminal 26 and the ground point, respectively and the gates thereof are commonly connected to the first signal output terminal 5(1). The drain-source paths of the pair of second amplifying complementary FETs 23 and 24 are connected in series between the power terminal 26 and the ground point, respectively, and the gates thereof are commonly connected to the second signal output terminal 5(2). One terminal of the low-frequency transmitting antenna 2 is connected to the connection point of the pair of first amplifying complementary FETs 21 and 22, and the other terminal thereof is connected to the connection point of the pair of second amplifying complementary FETs 23 and 24. In the power-supply-voltage controlling transistor 27, a collector is connected to the power terminal 26, an emitter is connected to the power supply terminal 5(4), and a base is connected to the voltage-control-signal output terminal 5(5), respectively.

The low-frequency-signal transmitting section 1 and the control section 5 having the above-described configuration operate as follows.

At the transmission timing of the on-vehicle transceiver 10, the control section 5 outputs complementary low-frequency signals to the first signal output terminal 5(1) and the second signal output terminal 5(2). The complementary low-frequency signals are supplied to the gates of the pair of first amplifying complementary FETs 21 and 22 and the gates of the pair of second amplifying complementary FETs 23 and 24, respectively. The pair of first amplifying complementary FETs 21 and 22 and the pair of second amplifying complementary FETs 23 and 24 power-amplify the complementary low-frequency signals. Then, the power-amplified complementary low-frequency signal is led between the connection point of the pair of first complementary FETs 21 and 22 and the connection point of the pair of second complementary FETs 23 and 24. The obtained complementary low-frequency signal is supplied to the low-frequency transmitting antenna 2 and thus the request signal is transmitted as the radio signal from the low-frequency transmitting antenna 2.

In this case, if the transmission level of the request signal to be transmitted at the transmission timing for the on-vehicle transceiver 10 can be set to the normal level, the voltage control signal from the voltage control signal output terminal 5(5) of the control section 5, which completely turns on the power-supply-voltage controlling transistor 27, is outputted to be supplied to the base of the power-supply-voltage controlling transistor 27. At this time, since the power-supply-voltage controlling transistor 27 is completely turned on by the voltage control signal, the power supply voltage to be supplied to the power supply terminal 5(4) of the control section 5 becomes the substantially same as the power supply voltage to be supplied to the power terminal 26, and the complementary low-frequency signals to be outputted from the first signal output terminal 5(1) and the second signal output terminal 5(2) become the request signals with the normal level. For this reason, the request signals with the normal level, that is, bias voltages with the normal level, are applied to the common gate of the first amplifying complementary FETs 21 and 22 and the common gate of the second amplifying complementary FETs 23 and 24, respectively. Therefore, the complementary low-frequency signal with the normal level is led between the connection point of the first amplifying complementary FETs 21 and 22 and the connection point of the second amplifying complementary FETs 23 and 24 so as to be supplied to the low-frequency transmitting antenna 2. As a result, the request signal with the normal level is transmitted as the radio signal from the low-frequency transmitting antenna 2.

On the other hand, in the on-vehicle transceiver 10, when the transmission level of the request signal to be transmitted is set to the low level that is lower than the normal level, the voltage control signal from the voltage-control-signal output terminal 5(5) of the control section 5, which intermediately turns on the power-supply-voltage controlling transistor 27, is outputted to be supplied to the base of the power-supply-voltage controlling transistor 27. At this time, since the power-supply-voltage controlling transistor 27 is intermediately turned on by the voltage control signal, the power supply voltage to be supplied to the power supplying terminal 5(4) of the control section 5 is slightly smaller than the power supply voltage to be supplied to the power terminal 26. Further, the complementary low-frequency signals to be outputted from the first signal output terminal 5(1) and the second signal output terminal 5(2) become the request signals with the low level that is lower than the normal level. For this reason, the request signals with the low level, that is, bias voltages with the low level, are applied to the common gate of the first amplifying complementary FETs 21 and 22 and the common gate of the second amplifying complementary FETs 23 and 24, respectively. Therefore, when the complementary low-frequency signal with the low level having a low driving current is led between the connection point of the first amplifying complementary FETs 21 and 22 and the connection point of the second amplifying complementary FETs 23 and 24 so that the low driving current of the complementary low-frequency signal is supplied to the low-frequency transmitting antenna 2. As a result, the request signal having the same low level is transmitted as the radio signal from the low-frequency transmitting antenna 2.

Even in this case, when the transmission level of the request signal to be transmitted is set in three stages of the normal level, the low level, and the lowest level in the on-vehicle transceiver 10, the voltage control signals, which are outputted from the control section 5 according to the respective stages, can be set to the control signal that completely turns on the power-supply-voltage controlling transistor 27, the control signal that intermediately turns on the power-supply-voltage controlling transistor 27, and the control signal that incompletely turns on the power-supply-voltage controlling transistor 27. Then, the levels of the complementary low-frequency signals, which are outputted from the first signal output terminal 5(1) and the second signal output terminal 5(2) are also set in three stages. As a result, the request signal having any one of the three stages of the transmission level is transmitted as the radio signal from the low-frequency transmitting antenna 2.

According to the passive keyless entry device of the present invention, when the on-vehicle transceiver receives the answer signal in the set time of the timing section after the request signal is transmitted and the answer signal includes the regular ID of the portable transceiver, the on-vehicle transceiver resets the timing section and controls the on-vehicle controlled mechanism, like the normal operation, based on the answer signal. On the other hand, in the case where the answer signal cannot be received even if the set time of the timing section has passed, the on-vehicle transceiver lowers the transmission level of the request signal by a certain value and retransmits the request signal to the portable transceiver. Therefore, even when the portable transceiver is disposed at the maximum distance of the predetermined range around the vehicle where the response is required and even when the high-level signal exceeding the tolerance level of the detecting section is inputted into the portable transceiver that is disposed close to the vehicle, the portable transceiver can reliably authenticate the regular signal.

## Claims

1. A passive keyless entry device comprising:
an on-vehicle transceiver (10); and
a portable transceiver (20),
**characterized in that** the on-vehicle transceiver (10) transmits a request signal to the portable transceiver (20), the portable transceiver (20) transmits an answer signal for causing an on-vehicle controlled mechanism to perform a control operation in response to the request signal, the on-vehicle transceiver (10) receives the answer signal so as to cause the on-vehicle controlled mechanism to perform the control operation,
the on-vehicle transceiver (10) has a control section (5) that processes transmission and received signals of the on-vehicle transceiver (10) and a control signal; and
a timing section (9) that checks time until a set time passes after the request signal is transmitted, and
the control section (5) receives the answer signal in the set time of the timing section (9) after the request signal is transmitted, when the answer signal includes the regular identification (ID) of the portable transceiver (20), resets the timing section (9) and controls the on-vehicle controlled mechanism based on the answer signal, and, when the answer signal cannot be received even if the set time of the timing section (9) has passed, retransmits, to the portable transceiver (20), the request signal with a lowered transmission level by a certain value.

2. The passive keyless entry device according to claim 1,
**characterized in that** a unit that lowers the transmission level of the request signal by the certain value decreases a driving current for driving an antenna (2) by a certain amount by the control of a control element that is connected in series to the antenna (2) for transmitting the request signal.

3. The passive keyless entry device according to claim 1 or 2,
**characterized in that** a unit that lowers the transmission level of the request signal by a certain value decreases a driving current for driving an antenna (2) by a certain amount by the control of a gate bias voltage of FETs (21, 22, 23, 24) for power-amplifying the request signal before the transmission.
